(19) **Europäisches Patentamt**

**European Patent Office**

**Office européen des brevets**

(11) **EP 1 345 680 B1**

(12) **FASCICULE DE BREVET EUROPEEN**

(45) Date de publication et mention
de la délivrance du brevet:
**27.10.2004 Bulletin 2004/44**

(51) Int Cl.⁷: **B01J 10/00**, B01J 19/00,
B01J 19/18, B01J 8/22,
B01F 3/04, C02F 1/72

(21) Numéro de dépôt: **01995732.3**

(22) Date de dépôt: **18.12.2001**

(86) Numéro de dépôt international:
**PCT/FR2001/004038**

(87) Numéro de publication internationale:
**WO 2002/049751 (27.06.2002 Gazette 2002/26)**

(54) **PROCEDE D'OXYDATION PAR VOIE HUMIDE OU OZONATION**

NASSOXYDATIONS- ODER OZONIERUNGSVERFAHREN

WET OXIDATION OR OZONIZATION PROCESS

(84) Etats contractants désignés:
**AT BE CH CY DE DK ES FI FR GB GR IE IT LI LU
MC NL PT SE TR**

(30) Priorité: **20.12.2000 FR 0016672**

(43) Date de publication de la demande:
**24.09.2003 Bulletin 2003/39**

(73) Titulaire: **L'AIR LIQUIDE, Société Anonyme à
Directoire et Conseil de Surveillance pour
l'Etude et l'Exploitation des
75321 Paris Cedex 07 (FR)**

(72) Inventeurs:
 • **Campo, Philippe**
 **F-Montigny le Bretonneux (FR)**
 • **BOISDON, Vincent**
 **F-92500 Rueil-Malmaison (FR)**
 • **TRICHET, Alain**
 **F-78220 Viroflay (FR)**
 • **COGNART, Patrice**
 **F-77590 Bois-Le-Roi (FR)**
 • **BOUQUET, Florent**
 **F-77870 Vulaines-Sur-Seine (FR)**

(74) Mandataire: **Conan, Philippe Claude
L'Air Liquide SA
Département Propriété Intellectuelle
75, quai d'Orsay
75321 Paris Cédex 07 (FR)**

(56) Documents cités:
 **EP-A- 0 341 813          EP-A- 0 553 709**
 **EP-A- 0 754 489          BE-A- 679 324**
 **US-A- 3 870 631          US-A- 5 478 535**

 • **PATENT ABSTRACTS OF JAPAN vol. 0112, no.
 32 (C-437), 29 juillet 1987 (1987-07-29) & JP 62
 045335 A (NIPPON KOKAN KK), 27 février 1987
 (1987-02-27)**

**Description**

La présente invention concerne un procédé d'oxydation de type oxydation par voie humide ou ozonation.

Elle se rapporte plus particulièrement à un procédé d'oxydation à l'aide d'un gaz d'oxydation d'un liquide contenu dans un réacteur comprenant au moins un moyen d'introduction du gaz dans le réacteur et au moins un moyen d'introduction du liquide dans le réacteur, au moins un moyen d'évacuation du liquide, au moins un moyen d'agitation du liquide, au moins un conduit permettant l'aspiration du gaz présent dans le réacteur et débouchant dans le liquide contenu dans le réacteur, procédé dans lequel le liquide et le gaz sont introduits dans le réacteur en quantités telles qu'un ciel gazeux est formé au dessus du liquide contenu dans le réacteur, dans lequel, dans une étape de mélange du gaz et du liquide, le gaz du ciel gazeux est aspiré dans le conduit et introduit dans le liquide présent dans le réacteur au niveau du moyen d'agitation du liquide de manière à dissoudre au moins une partie du gaz dans le liquide, et dans lequel dans une étape de récupération, la partie du gaz qui est introduite dans le liquide présent dans le réacteur et qui n'est pas dissoute dans le liquide est récupérée dans le ciel gazeux.

L'invention concerne notamment la technologie d'Oxydation par Voie Humide (OVH) ou « wet oxydation », laquelle est de façon classique mise en oeuvre dans différents types de réacteurs gaz/liquide, et notamment, les colonnes à bulles, les réacteurs tubulaires, mais aussi les réacteurs agités conventionnels ou non.

Un procédé de type OVH est notamment décrit dans un article présenté aux JIE (Journées Internationales de l'Eau) de Poitiers en 1998 et intitulé : "ATHOS, une solution innovante pour l'élimination des boues" (Proceedings JIE Poitiers 23-25 septembre 1998, Tome 2, p 69).

Les procédés OVH fonctionnent généralement de la manière suivante : le traitement s'effectue avec de l'air en tant qu'oxydant, à 250-270°C et sous 85-120 bars, dans des réacteurs présentant un ratio hauteur/diamètre compris entre 5 et 20. On utilise en général, pour ces installations des réacteurs de type colonne à bulle où le gaz oxydant est injecté à la base à co-courant ou à contre-courant du liquide. La hauteur de colonne est fonction des rendements de transfert gaz/liquide. Les coefficients de transfert sont faibles (généralement de $10^{-4}$ à $10^{-2}$ $s^{-1}$), ce qui en fait des réacteurs particulièrement adaptés pour les réactions à cinétiques lentes (régime chimique). Les volumes réactionnels sont importants et les temps de séjour longs (généralement plusieurs heures).

L'article cité ci-dessus décrit également un procédé connu sous le nom de « Aqueous Phase Oxydation process »qui consiste à traiter des boues de stations biologiques avec de l'oxygène pur, dans un réacteur tubulaire, placé dans un forage profond de 1 200 m, constitué de deux tubes principaux concentriques, un pour l'injection de la boue épaissie et de l'oxygène, et l'autre servant à la remontée de la boue traitée.

Un réacteur agité conventionnel (Stirred Tank Reactor ou STR) est décrit dans l'article de M. Lawrence M. Litz, dans CEP, Nov. 1985, pp 36-39, intitulé : "A Novel Gas-Liquid Stirred Tank Reactor"). Au sein d'un tel réacteur agité, la distribution des gaz est assurée généralement par un tore percé placé à la base du réacteur, en dessous de l'agitateur mécanique conçu, en principe, de manière à disperser le gaz dans la totalité du milieu réactionnel. Ce type de réacteur permet d'obtenir des coefficients de transfert plus élevés, en fonction entre autres de la vitesse d'agitation et de la nature du mobile, conduisant à des temps de séjour plus faibles que pour les deux types de réacteurs cités ci-dessus.

Il est connu de WO-A-99/04088, un procédé d'oxydation de liqueurs blanches ou noires mis en oeuvre sous pression, à haute température, dans un réacteur agité équipé d'un agitateur multi-pales, permettant un mélange gaz/liquide, axial et radial. En aval dudit réacteur, est disposé un séparateur gaz/liquide destiné à séparer les gaz non dissous de la liqueur oxydée.

Il est connu de WO-A-96/13463, un procédé d'oxydation d'effluents, dans un réacteur non conventionnel en présence d'un catalyseur hétérogène, lequel intervient dans la phase gazeuse, ménagée au-dessus de la phase liquide. Le liquide est agité, par recirculation, au moyen d'une pompe extérieure . Disposé dans la boucle de recirculation, un mélangeur en ligne mélange intimement du gaz avec la phase liquide.

Il est connu de US-A-4 328 175 et US-A- 4 454 077, des réacteurs équipés de moyen de mélange gaz/liquide à flux descendant, constitué d'une turbine hélicoïdale qui crée en surface de la phase liquide un vortex. Le gaz est injecté dans le ciel gazeux du réacteur - le ciel gazeux étant l'espace ménagé au dessus de la surface du liquide - et est entraîné, mélangé au liquide par effet vortex, au sein de la phase liquide. Le débit de pompage créé par l'hélice permet de disperser le mélange gaz/liquide dans l'ensemble du volume du réacteur.

Il est connu de US-A-4 919 849 et EP-A-0 579 251 un réacteur agité équipé d'une turbine hélicoïdale, dans lequel, au dessus des moyens d'agitation de la turbine - agitateur à flux axial descendant - sont prévus des tubes d'injection du gaz oxydant agencés horizontalement sous le niveau minimal de liquide, autour d'une portion creuse de l'arbre d'agitation. Le gaz, délivré à l'extrémité desdits tubes, est repris par le débit de pompage descendant créé par la turbine hélicoïdale (agitateur à flux axial), placée à l'intérieur d'un cylindre creux. La turbine dont la rotation assure la formation du vortex désiré disperse le mélange gaz/liquide vers le fond du réacteur.

Il est connu de EP-A-0 754 489 un réacteur agité mettant en jeu une communication entre le ciel gazeux et le coeur de la phase liquide. Injecté dans le ciel gazeux, le gaz est aspiré dans la phase liquide par l'intermédiaire de canalisations en forme de « L ». Elles sont disposées autour de l'arbre de l'agitateur, leurs extrémités supérieures se situant dans le ciel gazeux, tandis que leurs extrémités inférieures débouchent derrière les pales dudit agitateur, en périphérie de celui-ci. L'agitateur est une turbine radiale à pales plates qui assure à la fois l'aspiration en générant une dépression dans la phase liquide et le mélange du gaz dans le liquide. JP-A-62045335 et EP-A- 0341813 décrivent des procédés d'oxydation mettant en oeuvre des récyclages des gaz dans la phase liquide.

Les dispositifs mettant en jeu une communication entre le ciel gazeux et le coeur de la phase liquide assurent une recirculation du gaz dans le réacteur ; dans ce type de dispositifs, le débit de gaz recirculé peut être corrélé à un nombre sans dimension dit « nombre de Froude modifié » (Fr*), défini par la formule ci-après :

$$Fr^* = \frac{N^2 \times d^2}{g \times l} \; ;$$

avec:

N : vitesse d'agitation en tours/seconde,
d : diamètre du mobile d'agitation en m,
g : accélération de la pesanteur en m/s$^2$,
l : hauteur d'immersion de la turbine en m.

L'appareil décrit dans EP-A-0 754 489, permet d'atteindre une valeur du « nombre de Froude modifié » de 0,64 (voir l'exemple).

Le procédé de l'invention est un procédé d'oxydation par un gaz d'oxydation de composés dissous ou dispersés dans un milieu liquide. Il s'agit d'un procédé d'oxydation qui peut tout aussi bien être mis en oeuvre sur des solutions que sur des dispersions. Il convient notamment pour l'oxydation des boues de stations d'épuration par voie biologique, l'oxydation de minerais contenant du soufre en hydrométallurgie, l'oxydation de sulfures dans les liqueurs de papeteries, il permet aussi par exemple entre autres applications, d'améliorer la biodégradabilité de composés dissous mis en oeuvre dans un réacteur disposant d'un ciel gazeux, il s'applique tout particulièrement à l'OVH ou à l'ozonation.

Le terme ciel gazeux est utilisé indifféremment pour désigner l'espace situé au-dessus de la phase liquide dans le réacteur et le gaz contenu dans cet espace ; le contexte permet sans ambiguïté à l'homme du métier de savoir la signification à accorder à ce terme lorsque la distinction s'avère nécessaire .

Le terme gaz d'oxydation utilisé dans la description signifie un gaz contenant seul ou en mélange un gaz oxydant, le gaz oxydant étant l'oxygène ou l'ozone. Ainsi, le terme gaz oxydant utilisé dans la description signifie oxygène ou ozone.

Le procédé selon l'invention permet notamment d'augmenter les performances des procédés d'oxydation considérés par rapport à l'art antérieur.

Il permet aussi grâce à un recyclage poussé du gaz d'oxydation d'améliorer la consommation du gaz oxydant contenu dans le gaz d'oxydation, permettant ainsi notamment d'utiliser des gaz contenant des quantités importantes de gaz inertes tout en limitant les temps de réaction et les volumes réactionnels.

Dans le cas des réactions en milieu liquide, mettant en oeuvre des gaz, il est en effet possible de considérer schématiquement deux étapes : la première consistant à mettre l'oxydant au contact du composé à oxyder, c'est, dans le contexte qui nous intéresse ici l'étape de transfert ou transport du gaz, la seconde est la réaction chimique. La cinétique globale de la réaction gaz/liquide sera donc dépendante de l'étape la plus lente. L'invention est particulièrement adaptée pour les réactions d'oxydation en milieu liquide par l'oxygène ou l'ozone, dans le cas où la seconde étape est très rapide par rapport à la première. L'élément déterminant pour la vitesse de réaction est le transfert du gaz et la mise en contact des composés oxydants et à oxyder.

Le procédé selon l'invention permet une mise au contact particulièrement rapide et efficace d'une quantité très importante de composés à oxyder avec les composés oxydants par un apport massif des composés à oxyder du liquide vers le gaz, en une zone du réacteur et selon un mode judicieusement choisi, formant ainsi une dispersion gaz/liquide. Cette mise en contact permet de transférer du gaz dans le liquide et de commencer l'oxydation ; elle est suivie d'une éjection de la dispersion gaz/liquide formée lors de cette première étape vers une seconde zone du réacteur contenant la plus grande part de la masse de liquide contenue dans le réacteur afin d'y mélanger la première dispersion à l'ensemble du liquide du réacteur afin d'y poursuivre le transfert ainsi que l'oxydation commencés. La partie du gaz d'oxydation non dissoute dans la phase liquide à l'issue de ces deux étapes est récupérée dans le ciel gazeux. Dans une troisième zone, située en dessous du mobile d'agitation, et en dessous de l'alimentation en gaz d'oxydation (si celle-ci se fait dans la phase liquide), on peut procéder au soutirage du liquide traité, celui-ci étant soutiré sous les moyens d'agitation et en dehors de la zone ou s'effectue la remontée du gaz non dissous vers la surface, il ne contient pas ou peu de gaz non dissous, ce qui permettra en général son utilisation sans dégazage ultérieur.

Grâce au procédé de l'invention, les vitesses de transfert de gaz oxydant ne sont plus un facteur limitant vis-à-vis des vitesses réactionnelles de composés rapidement oxydables. Ainsi, quoique sans se limiter à ce contexte, on notera que le procédé de l'invention est tout particulièrement adapté aux réactions d'oxydation qui nécessitent des flux massiques élevés en gaz oxydant.

Selon une de ses caractéristiques essentielles, le procédé selon l'invention est caractérisé en ce que lors de l'étape de mélange du gaz et du liquide, le moyen d'agitation du liquide crée un flux de liquide dans l'espace à proximité immédiate de l'extrémité du conduit débouchant dans le liquide et génère une dispersion gaz/liquide dans la zone au voisinage dudit espace, dite zone pré-réactionnelle, au sein de laquelle le liquide réagit avec le gaz, puis véhicule et éjecte en sa périphérie ladite dispersion gaz/liquide selon une direction sensiblement horizontale, de telle sorte que le gaz se dissout dans le liquide dans la zone s'étendant du moyen d'agitation à la surface du liquide, dite zone de mélange.

Le procédé selon l'invention assure ainsi un flux élevé en gaz d'oxydation transféré vers le liquide contenu dans le réacteur. Le procédé de l'invention assure donc une consommation très rapide du gaz oxydant, et ceci, de par son mode de re-circulation du ciel gazeux vers le liquide, mais aussi et surtout de par son mode de circulation conjoint de liquide vers le point d'amenée du gaz aspiré, de telle sorte qu'une première zone avantageusement alimentée par du gaz d'oxydation en provenance du ciel gazeux et par un flux de liquide se crée à la base du conduit d'amenée du gaz. Des composés, oxydants et à oxyder, vont se rencontrer dans cette première zone et réagir immédiatement, c'est la raison pour laquelle cette zone est appelée zone pré-réactionnelle. La partie du gaz d'oxydation n'ayant pas réagi, forme avec le liquide une dispersion qui est véhiculée par les moyens d'agitation vers la périphérie de ceux-ci pour être éjectée dans la masse du liquide contenu dans le réacteur, sensiblement parallèlement à la surface, pour y parfaire sa dispersion et son transfert au sein du liquide.

Le mode d'éjection de la dispersion gaz/liquide ( parallèlement à la surface) permet de limiter la hauteur entre le lieu d'éjection dans la masse liquide et le point d'évacuation du liquide, le transfert du gaz s'effectuant en effet pour l'essentiel, et ceci en l'absence d'organe de mélange axial, dans une zone de la phase liquide délimitée en sa partie inférieure par les moyens d'agitation, verticalement, par les parois du réacteur et en sa partie supérieure par la surface du liquide. Dans cette deuxième zone, dite zone de mélange, la mise en contact du gaz oxydant et des composés à oxyder, et par conséquent l'oxydation se poursuivent. La partie du gaz d'oxydation non dissoute à l'issue de sa remontée vers la surface est récupérée dans le ciel.

Le procédé selon l'invention de par son mode de mise en contact et de circulation du gaz dans le liquide assure ainsi un flux massique élevé en gaz oxydant par unité de volume de liquide contenu dans le réacteur, et par unité de temps.

En effet, si on considère le flux massique de gaz oxydant, intervenant par unité de volume du liquide et par unité de temps, le procédé de l'invention, permet un transfert de gaz oxydant par $m^3$ de volume réactionnel, par heure et par bar de pression partielle de gaz oxydant tel que, avec :

$$F = \text{masse de gaz oxydant/}m^3 \text{ de volume réactionnel liquide/h}$$

On a $F \geq 0,1$ kg/$m^3$/h et pouvant atteindre 750 kg/$m^3$/h, si le gaz oxydant est l'oxygène (kg d'oxygène pur), avec une pression partielle d'oxygène comprise entre 1 et 10 bar.

On a $F \geq 0,2$ kg/$m^3$/h, et pouvant dépasser 40 kg/$m^3$/h, si le gaz oxydant est l'ozone (kg d'ozone pur), avec une pression partielle d'ozone comprise entre 0,05 et 0,5 bar

En fonction des applications envisagées, les flux de gaz mis en oeuvre pourront notamment être (sans que cela constitue une limitation du procédé de l'invention).

- Dans le cas de l'oxydation par l'oxygène de composés soufrés :

$$0,1 \text{ kg } O_2/m^3/h \leq F \leq 750 \text{ kg } O_2/m^3/h;$$

- Dans le cas de l'oxydation par l'oxygène de boues de station biologique :

$$1 \text{ kg } O_2/m^3/h \leq F \leq 200 \text{ kg } O_2/m^3/h ;$$

- Dans le cas de l'oxydation par l'oxygène d'effluents peu biodégradables :

$$2 \text{ kg } O_2/m^3/h \leq F \leq 100 \text{ kg } O_2/m^3/h$$

- Dans le cas de l'oxydation par l'ozone:

$$0,01 \text{ kg } O_3/m^3/h \leq F \leq 40 \text{ kg } O_3/m^3/h;$$

plus généralement :

$$0,2 \text{ kg } O_3/m^3/h \leq F \leq 40 \text{ kg } O_3/m^3/h.$$

Ce type d'oxydation met en oeuvre des masses de gaz oxydant par unité de volume de liquides traités pouvant être très importantes. L'homme du métier fait traditionnellement appel pour leur mise en oeuvre à des réacteurs tels des colonnes à bulles avec des temps de séjour élevés pour permettre un transfert de gaz important par unité de volume de liquide. Il peut aussi faire appel à des systèmes de recirculation par boucle externe selon l'art antérieur.

Le procédé de l'invention permet d'obtenir au sein du réacteur des flux massiques élevés de gaz oxydant, par unité de volume de liquide traité, par amélioration du transfert grâce notamment à la zone pré-réactionnelle ménagée et à la recirculation interne du gaz d'oxydation selon l'invention.

Le débit de gaz recirculé est au moins égal au débit de gaz introduit et avantageusement au moins égal à trois ou quatre fois ce débit. Le débit de recirculation est optimisé, amélioré, par rapport à celui des technologies de l'art antérieur.

Selon un mode de réalisation particulier de l'invention, le liquide est introduit et évacué en continu.

Selon un autre mode de réalisation particulier de l'invention, le liquide est introduit et évacué en discontinu.

Selon un mode de réalisation particulièrement avantageux de l'invention, au moins un moyen d'introduction du liquide dans le réacteur introduit le liquide à proximité du moyen d'agitation de manière à ce qu'au moins une partie du flux de liquide dans l'espace provienne directement dudit moyen d'introduction du liquide dans le réacteur. La réaction d'oxydation dans la zone pré-réactionnelle sera en effet d'autant plus efficace que le liquide amené à l'arrivée du gaz aspiré contiendra plus d'éléments à oxyder. Il s'agit donc d'une localisation privilégiée pour l'introduction de liquide riche en composés à oxyder dans le réacteur.

Avantageusement, on soutire le liquide dans une troisième zone du réacteur dite zone de soutirage située en partie basse du réacteur et le liquide soutiré présente une teneur en gaz non dissous inférieure à 5% en volume de gaz / volume de liquide. Le liquide ainsi soutiré sous les moyens d'agitation, et sous l'alimentation en gaz d'oxydation lorsque celle-ci se fait dans le liquide n'aura en général pas besoin de dégazage ultérieur, il ne sera pas nécessaire d'ajouter en aval, un réacteur de dégazage. Le réacteur utile à la mise en oeuvre du procédé de l'invention pourra être optimisé du point de vue de son encombrement.

Ainsi, la recirculation du gaz d'oxydation et sa dispersion dans le liquide , associées à une agitation adéquate de ce dernier (sans avoir à y gérer le maintien d'un vortex) créent dans l'ensemble du réacteur un parfait mélange du gaz et du liquide, tout en permettant un soutirage de liquide traité pauvre en gaz en partie basse du réacteur, dans la zone de soutirage . L'excellent mélange gaz/liquide au sein du réacteur peut être apprécié par le niveau de la rétention gazeuse (ou gas holdup en anglais) obtenue au sein du réacteur qui peut atteindre 50 % ou plus.

Selon un mode d'application particulier de l'invention, le gaz d'oxydation contient au moins 20% d'oxygène, de préférence au moins 80% d'oxygène, de préférence encore plus de 98% d'oxygène.

Selon un mode d'application particulier de l'invention, le gaz d'oxydation contient de l'ozone.

De préférence, le réacteur délimite un volume clos. En effet, le procédé de l'invention, s'il peut être mis en oeuvre - dans le cas de réaction réalisée à une pression proche de la pression atmosphérique - dans un réacteur dont le ciel est un espace protégé, mais non clos, ménagé au dessus d'une phase liquide, il est plus avantageusement mis en oeuvre dans un réacteur délimitant un volume clos.

De préférence, le liquide est un liquide aqueux.

Avantageusement, le gaz d'oxydation est alimenté en continu à partir d'une source extérieure.

Selon un mode de réalisation particulier de l'invention, l'alimentation en gaz d'oxydation se fait à débit de gaz introduit contrôlé.

Avantageusement, l'alimentation en gaz d'oxydation se fait à pression de gaz oxydant dans le ciel gazeux contrôlée.

De manière préférentielle, lors de son alimentation dans le réacteur, le gaz d'oxydation est introduit dans le liquide et/ou le gaz:

- directement, dans le ciel gazeux ; et/ou
- directement au sein du liquide contenu dans le réacteur, avantageusement au moyen d'un tore percé d'orifices adéquats ; et/ou
- dans un espace ménagé dans le ciel gazeux, isolé totalement ou partiellement dudit ciel, de sorte qu'il soit directement aspiré pour être dispersé dans le liquide.

Il sera généralement délivré dans le liquide contenu dans le réacteur par l'intermédiaire d'un tore, ou dans le ciel gazeux.

Avantageusement, durant la mise en oeuvre du procédé, une purge du ciel gazeux est réalisée en un point situé à une distance suffisante du lieu d'introduction du gaz d'oxydation pour ne pas perturber le fonctionnement du réacteur. En effet, lorsque des gaz non oxydants sont présents dans le ciel gazeux, leur accumulation nuit au déroulement de la réaction d'oxydation, pouvant même conduire à son arrêt ; il est donc nécessaire de purger le ciel gazeux pour diminuer la concentration en ces gaz. Afin d'éviter de capter directement le gaz d'oxydation avant qu'il n'ait circulé dans le réacteur, la purge est réalisée en un point suffisamment distant du lieu d'introduction du gaz d'oxydation.

Selon un mode de réalisation particulièrement avantageux de l'invention, les moyens d'agitation comprennent une turbine auto-aspirante reliée par un arbre à un système d'entraînement. Ces moyens d'agitation assurent la mise en oeuvre du procédé de l'invention, mise en oeuvre qui comprend :

- l'agitation de la phase liquide,
- l'aspiration de gaz dans le ciel gazeux et son amenée dans le liquide agité au niveau des moyens d'agitation, la formation de la dispersion gaz/liquide dans la zone pré-réactionnelle , son éjection en périphérie des moyens d'agitation dans la zone de mélange, et le recyclage du gaz dans le ciel gazeux.

De préférence, on utilise une turbine auto-aspirante présentant un nombre de Froude modifié élevé, (la définition du nombre de Froude modifié (Fr*) ayant été rappelée dans l'introduction du présent texte) ; ainsi, de préférence ladite turbine auto-aspirante présente un nombre de Froude modifié d'au moins 1, avantageusement compris entre 1,5 et 4. Dans le cadre d'essais, une turbine auto-aspirante dont le nombre de Froude était d'environ 1,5 a permis d'obtenir un débit de recirculation du gaz entre le ciel gazeux et le liquide égal à 4 fois le débit de gaz introduit dans le réacteur. La Demanderesse a obtenu, dans de telles conditions, des coefficients de transfert compris entre 1 et 10 $s^{-1}$, soit environ 1 000 fois supérieurs à ceux de colonnes à bulles, 10 fois supérieurs à ceux de réacteurs agités conventionnels de type STR ou à ceux de réacteurs agités équipés d'une boucle de recirculation.

La turbine auto-aspirante (turbine-pompe), avantageusement utilisée dans le cadre de la mise en oeuvre du procédé de l'invention, peut être de différents types, en tout état de cause, ladite turbine est d'un type générant un flux radial, sensiblement parallèle à la surface du liquide.

Selon une première variante, l'arbre de la turbine est un arbre creux, comportant au niveau du ciel gazeux au moins une lumière ; le gaz étant aspiré au niveau de la lumière dans l'arbre creux.

Selon une seconde variante, l'arbre de la turbine est un arbre plein enveloppé coaxialement par une chemise, avantageusement cylindrique, un espace étant ménagé entre l'arbre plein et la chemise, laquelle communique en son extrémité supérieure avec le ciel gazeux et débouche en son extrémité inférieure au niveau de la zone pré-réactionnelle dans la turbine auto-aspirante, le gaz étant aspiré au niveau du ciel gazeux dans l'espace ménagé entre l'arbre et la chemise.

Il est également possible d'agencer autour de l'arbre, plein ou creux, de préférence plein, des canalisations pour le transfert du gaz du ciel gazeux vers la turbine.

Quel que soit le type d'arbre mis en oeuvre, celui-ci peut être associé à des turbines auto-aspirantes de différents types.

Avantageusement, la turbine auto-aspirante comporte au moins deux disques horizontaux, un disque supérieur et un disque inférieur, reliés l'un à l'autre par des ailettes (ou aubes radiales) ; un espace est ménagé entre le disque supérieur et l'arbre de la turbine, espace assurant l'apport du flux de liquide à proximité immédiate de l'extrémité du conduit (d'aspiration de gaz) vers la zone pré-réactionnelle située à la base de l'arbre entre les disques de la turbine. L'utilisation d'une telle turbine à disques assure une excellente dispersion radiale du gaz dans le liquide dans la "zone de mélange".

Quelle que soit la géométrie exacte de la turbine, et l'agencement permettant à son arbre de transférer du gaz du ciel gazeux vers la turbine, il est avantageusement prévu de délivrer ledit gaz dans une zone de turbulence maximale (généré avantageusement par l'espace prévu dans le disque supérieur de la turbine à disques).

Dans le but d'éviter toute décantation des matières solides dans le fond du réacteur, de manière avantageuse, les matières solides présentes sont mises en suspension.

Avantageusement, le réacteur au sein duquel le procédé de l'invention est mis en oeuvre, est équipé sur ses parois internes de contre-pales anti-vortex. Celles-ci sont destinées à prévenir l'apparition d'un vortex préjudiciable au bon mélange gaz/liquide.

Le procédé d'oxydation de l'invention met généralement en jeu des réactions exothermiques. Dans une telle hypothèse, une évacuation au moins partielle des calories dégagées est avantageusement réalisée grâce à des moyens de refroidissement disposés à l'intérieur et/ou à l'extérieur du réacteur. De tels moyens de refroidissement ainsi que leurs différents modes d'agencement sont connus de l'homme du métier. Ils interviennent de façon classique: un fluide caloporteur circule généralement en leur sein.

Le procédé d'oxydation de l'invention peut par ailleurs nécessiter, pour son démarrage, un chauffage de la charge (liquide chargé en composés à oxyder,). Indépendamment de l'étape de démarrage, il peut s'avérer nécessaire de fournir des calories à la charge traitée, notamment dans l'hypothèse où le procédé d'oxydation en jeu ne permettrait pas d'atteindre les conditions d'auto-thermie. Dans ce cas, avantageusement, le liquide est chauffé. On fait pour cela intervenir des moyens classiques.

En particulier, l'oxydation mise en oeuvre selon le procédé de l'invention peut être une oxydation catalytique. Dans une telle hypothèse, le catalyseur peut intervenir dans le ciel gazeux (catalyse hétérogene, généralement) et/ou dans le liquide (catalyse hétérogène et/ou homogène), et/ou dans ou autour de l'arbre, selon qu'il s'agit d'un arbre creux, ou d'un arbre plein, dans le cadre de l'utilisation d'une turbine auto-aspirante. (catalyse hétérogène, généralement), et/ou dans la turbine.

Le procédé de l'invention est avantageusement mis en oeuvre avec :

- un contrôle de la température ($\theta$) et de la pression (P) au sein du réacteur, et/ou,
- un contrôle du niveau de liquide au sein dudit réacteur, et/ou,
- un contrôle de la quantité de gaz oxydant introduit, et/ou,
- un contrôle de la teneur en gaz oxydant du ciel gazeux, lorsqu'au moins un gaz non oxydant est contenu dans le gaz d'oxydation.

Le procédé de l'invention, performant en lui-même, par le fait que sa mise en oeuvre optimise l'utilisation du gaz oxydation, s'est révélé remarquablement adapté dans de nombreux contextes et notamment lorsqu'il est mis en oeuvre :

a) pour l'oxydation par l'oxygène de liquide constitué de milieux aqueux renfermant des composés soufrés et/ou des composés métalliques, et notamment pour :

- l'oxydation partielle ou totale des sulfures de liqueurs de papeterie.
- la synthèse de polysulfures par oxydation de liqueurs de papeterie,
- l'oxydation des sulfures dans les effluents industriels, notamment les souches de raffinerie,
- l'oxydation de sulfites en sulfates,
- l'oxydation de thiosulfates en sulfates,
- l'oxydation de composés métalliques tels que $FeSO_4$, FeS, $FeCl_2$.

b) pour l'oxydation par l'oxygène de liquide constitués de milieux aqueux contenant des composés organiques et présentant une demande chimique en oxygène (DCO) comprise entre 5 et 200 g/l, et notamment pour l'oxydation d'effluents difficilement biodégradables et/ou renfermant des inhibiteurs de réactions biologiques ;
c) pour l'oxydation par l'oxygène de boues organiques dans des milieux aqueux ;
d) pour l'oxydation par l'ozone de milieux aqueux; et notamment pour :

- la décoloration à l'ozone d'effluents industriels ou d'eaux de procédé,
- l'ozonation des boues biologiques,
- l'ozonation des cyanures,
- l'ozonation de solutions aqueuses renfermant des composés organiques et présentant une demande chimique en oxygène (DCO) comprise entre 10 mg/l et 10 g/l.

Dans chacun des contextes a) à d) précisés ci-dessus, la Demanderesse préconise la mise en oeuvre de l'oxydation, selon l'invention, dans les conditions de température ($\theta$) et de pression dans le ciel gazeux (P) suivantes :

a) $20°C \leq \theta \leq 200°C$ et $10^5$ Pa $\leq$ P $\leq 10^7$ Pa (entre 1 et 100 bars) ;
avantageusement :
$60°C \leq \theta \leq 150°C$ et $10^5$ Pa $\leq$ P $\leq 30.10^5$ Pa (entre 1 et 30 bars) ;
de préférence :
$100°C \leq \theta \leq 130°C$ et $10^5$ Pa $\leq$ P $\leq 15.10^5$ Pa (entre 1 et 15 bars) ;
b) $20°C \leq \theta \leq 250°C$ et $10^5$ Pa $\leq$ P $\leq 10^7$ Pa (entre 1 et 100 bars) ;

avantageusement :
80°C ≤ θ ≤ 180°C    et $10^5$ Pa ≤ P ≤ $25.10^5$ Pa (entre 1 et 25 bars) ;
c) 40°C ≤ θ ≤ 300°C    et $10^6$ Pa ≤ P ≤ $15.10^6$ Pa (entre 10 et 150 bars) ;
avantageusement :
150°C ≤ θ ≤ 250°C et $2.10^6$ Pa ≤ P ≤ $12.10^6$ Pa (entre 20 et 120 bars) ;
d) 5°C ≤ θ ≤ 90°C et $10^5$ Pa ≤ P ≤ $1.510^6$ Pa (entre 1 et 15 bars) ;
avantageusement :
10°C ≤ θ ≤ 30°C    et $10^5$ Pa ≤ P ≤ $3.10^5$ Pa (entre 1 et 3 bars).

Dans l'un ou l'autre des contextes a) à d) précités, l'oxydation est avantageusement mise en oeuvre en présence d'au moins un initiateur de réactions radicalaires, notamment choisi parmi le peroxyde d'hydrogène, les ultraviolets, les catalyseurs de type métaux ou composés métalliques, les ions OH⁻ et les quinones..

La mise en oeuvre du procédé de l'invention permet dans des conditions douces de température et de pression (voir notamment les plages avantageuses et préférées énoncées ci-dessus) de minimiser le temps de séjour du liquide dans le réacteur. Les résultats obtenus lors de la mise en oeuvre de l'oxydation de sulfures ou de l'oxydation d'effluents en vue d'améliorer leur biodégradabilité, selon l'invention, sont particulièrement remarquables.

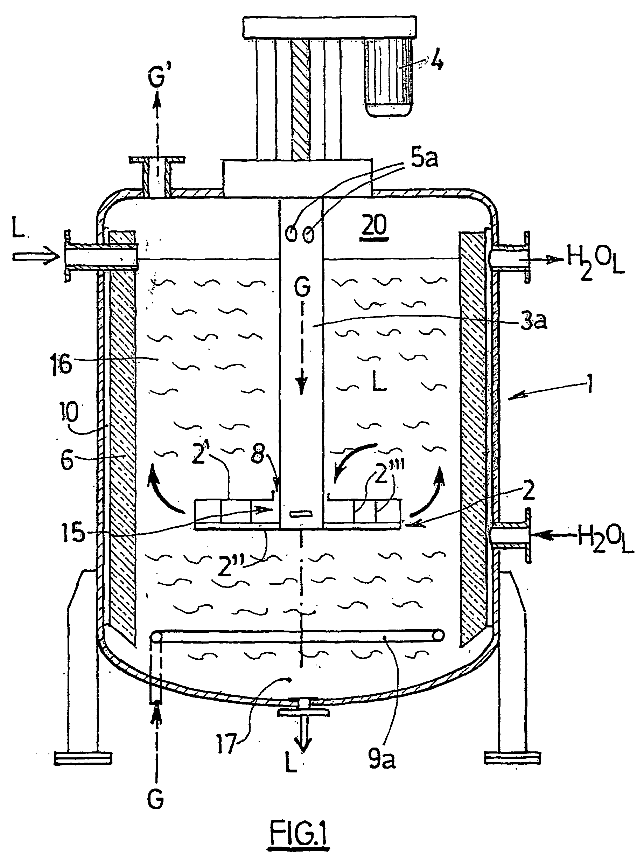

On se propose maintenant de rappeler les principales caractéristiques du procédé de l'invention, en référence aux trois figures annexées, figures 1 à 3 qui montrent schématiquement, en coupe, un réacteur équipé de moyens pour la mise en oeuvre de trois variantes du procédé d'oxydation selon l'invention.

Sur les trois figures, on a représenté :

- en L, le liquide à traiter contenu dans le réacteur ;le liquide est introduit en partie haute du réacteur et soutiré en point bas, en continu ou non.
- En G, le gaz d'oxydation (renfermant du gaz non oxydant G'qui non consommé est purgé du ciel gazeux 20),
- En 1, le réacteur clos équipé d'une turbine auto-aspirante 2.

La turbine auto-aspirante 2 est une turbine à disques. Elle comporte un disque supérieur 2' et un disque inférieur 2", solidaires par l'intermédiaire d'ailettes ou aubes radiales 2'''. Dans le disque supérieur 2', est ménagé un espace central 8, dans lequel pénètre le dispositif d'amenée du gaz (arbre creux 3a ou arbre plein 3b). Du liquide est aspiré dans la turbine 2 via l'espace 8 pour un mélange gaz/liquide. La turbine 2 est entraînée en rotation, par l'intermédiaire de l'arbre (3a, 3b), grâce au système d'entraînement (moteur) 4.

Le réacteur 1 est également équipé :

- de contre-pales anti-vortex 6, sur ses parois internes ;
- d'un circuit de refroidissement 10, dans lesdites parois internes, circuit dans lequel circule, à titre de fluide réfrigérant, de l'eau.

Selon la variante du procédé illustrée sur la figure 1, le gaz d'oxydation G (oxygène VSA , par exemple) est introduit, dans le liquide en partie basse du réacteur 1, au travers d'un tore 9a, percé d'orifices adéquats. Le gaz G après une première traversée du liquide agité, se retrouve en partie dans le ciel gazeux 20, il est alors aspiré au travers de lumières 5a, dans l'arbre creux 3a. Comportant dans sa partie inférieure, au niveau de et dans la turbine auto-aspirante, au moins une fente (non référencée), l'arbre creux 3a délivre le gaz aspiré, au sein du liquide via une première étape de mélange du gaz à du liquide L, présent au sein de la turbine, cette première étape de mélange s'effectuant dans la zone pré-réactionnelle 15 située dans la turbine, autour de l'arbre. Lors de ce premier mélange, une partie des composés réagit, en même temps qu'une première dispersion gaz/liquide se fait. Cette étape est suivie d'une éjection radialé de la dispersion dans L. La qualité du mélange gaz/liquide au sein du réacteur peut se traduire par une rétention de gaz supérieure à 50 %. Ce mélange s'effectue dans la zone de mélange 16 dans le réacteur. Le gaz est, en partie, recirculé plusieurs fois. Pour éviter une accumulation de gaz non oxydant dans le ciel gazeux 20, on a prévu un dispositif de purge de G', sur la paroi supérieure du réacteur 1. Le liquide traité est déchargé par soutirage en partie basse du réacteur. Ce soutirage est notamment effectué dans la zone de soutirage 17 aménagée en dessous de la turbine et en dessous du tore d'alimentation en gaz G.

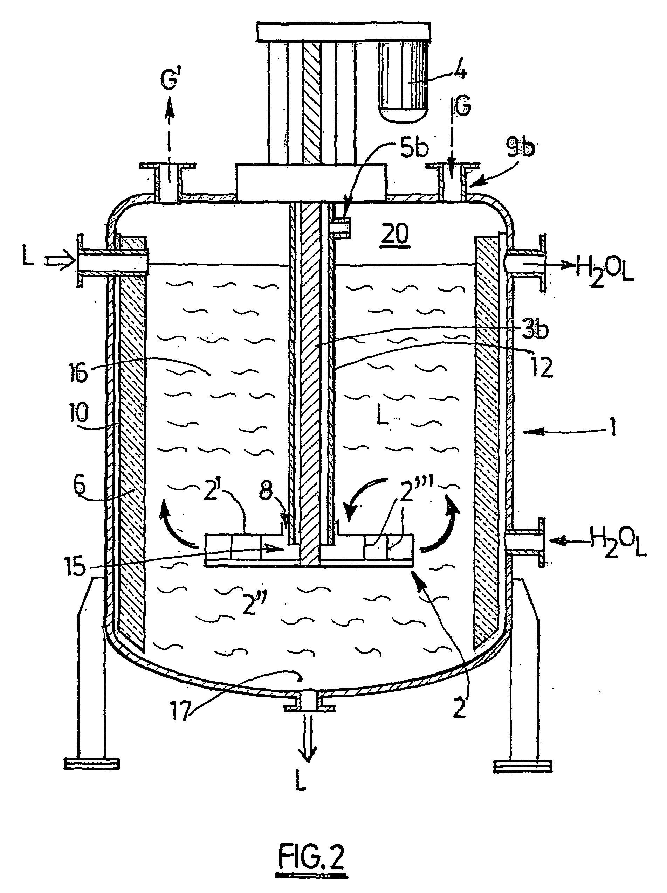

Selon la variante du procédé illustré sur la figure 2, le gaz d'oxydation G est introduit, dans le ciel gazeux 20, en partie haute du réacteur 1, au travers d'un dispositif d'injection 9b. Il est alors directement aspiré dans l'espace ménagé autour de l'arbre plein 3b, espace ménagé entre l'arbre plein 3b et une chemise cylindrique 12 agencée autour de celui-ci au niveau de l'orifice 5b, percé dans la chemise 12, pour être délivré au niveau de et dans la turbine auto-aspirante 2. La chemise 12 présente une hauteur adéquate (variante représentée) ou des orifices adéquats, pour la délivrance du gaz au voisinage immédiat de l'espace 8 d'arrivée du liquide. Le gaz est ainsi parfaitement mélangé au liquide, et recircule, selon une variante du mode précédemment décrit.

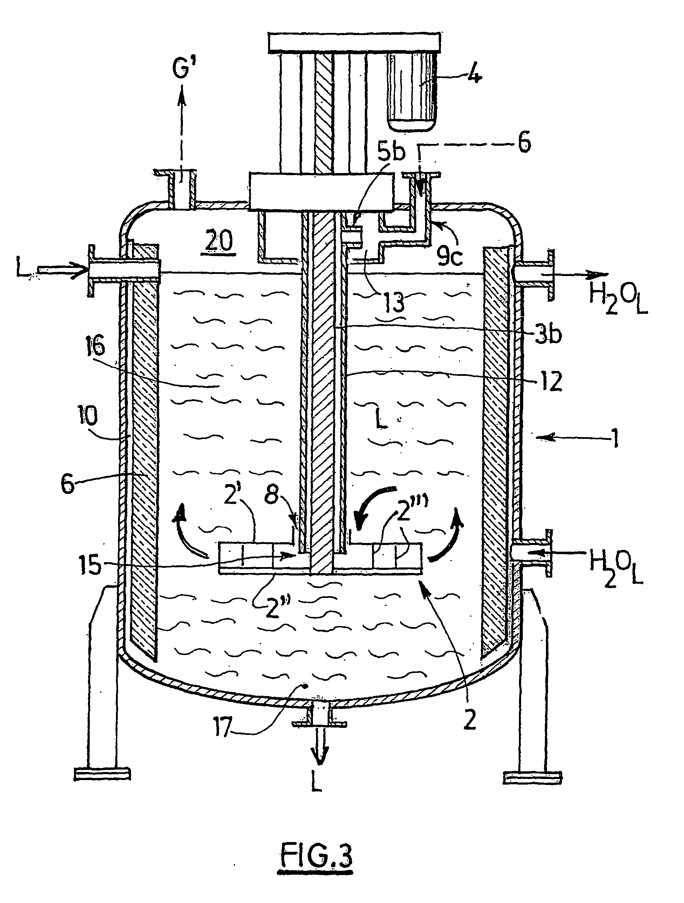

Selon la variante représentée sur la figure 3, le gaz d'oxydation G (oxygène ozoné, par exemple) est introduit dans le ciel gazeux 20, dans un espace 13. Il est introduit par le biais de moyens 9c dans ledit espace 13, où il est aspiré dans l'espace ménagé entre l'arbre plein 3b et la chemise 12 (aspiration au travers de l'orifice 5b ménagé dans la chemise 12) pour être délivré au niveau de, et dans la turbine auto-aspirante 2, conformément aux variantes précédentes. Un tel mode d'introduction du gaz G, que l'on pourrait qualifier d'introduction protégée, limite le prélèvement direct du gaz G par le système de purge.

Selon la variante représentée, l'espace 13 ménagé dans le ciel gazeux 20 n'est que partiellement isolé du ciel gazeux 20 ; ce qui autorise le recyclage du gaz par les orifices 5b à l'intérieur de cet espace 13.

On peut tout à fait concevoir une autre variante selon laquelle l'espace protégé, pour l'introduction du gaz G, est totalement isolé du ciel gazeux. Dans le cadre d'une telle variante, le gaz G introduit est aspiré au travers d'orifices 5b et il est nécessaire de prévoir dans la chemise, au niveau du ciel gazeux mais hors espace protégé, au moins un autre orifice pour l'aspiration du gaz présent dans le ciel gazeux après avoir circulé dans le liquide L.

On se propose d'illustrer maintenant l'invention par les exemples ci-après.

Exemple 1

Dans une première série d'essais, la Demanderesse a oxydé (par l'oxygène), selon le procédé de l'invention, des liqueurs blanches de papeterie, présentant les caractéristiques suivantes :

- concentration en sulfure 18 g/l (44 g/l de $Na_2S$)
- température initiale 85°C
- teneur approximative en soude : 90 g/l (NaOH).

Les liqueurs, après oxydation, sont utilisées comme source d'alcali dans le procédé papetier.

La liqueur non oxydée est introduite en continu dans le haut d'un réacteur équipé d'une turbine auto-aspirante. La sortie de liqueur oxydée est régulée par une sonde de niveau. Le soutirage est mis en oeuvre dans la partie basse du réacteur. L'oxydation est effectuée à pression constante, un régulateur de pression permettant de maintenir la pression par un apport de gaz d'oxydation au fur et à mesure que l'oxygène est consommé.

L'élévation de température n'est due qu'aux calories dégagées par la réaction. La température de la réaction est régulée grâce à l'intervention d'un serpentin de refroidissement externe.

Dans le cas de l'utilisation d'un gaz d'oxydation contenant des gaz inertes (cas de l'essai 2), une purge proportionnelle au débit de gaz entrant est réalisée. Cette purge est effectuée sur les gaz contenus dans le ciel du réacteur. Elle permet d'éliminer principalement les gaz inertes introduits en maintenant une consommation d'oxygène très proche de la stoechiométrie. Le réacteur utilisé est du type de celui représenté sur la figure 1.

Le réacteur utilisé et la turbine auto-aspirante dont il est équipé sont en Inox 316L. Le réacteur et sa turbine présentent les caractéristiques ci-après :

Diamètre interne de la cuve : 0,8 m
Volume utile du réacteur : 300 à 450 l
Hauteur de l'ensemble (moteur + cuve) : 2,7 m
Pression maximale de service : 20 bars
Puissance du moteur d'agitation : 3 à 15 kW
Vitesse de rotation de l'arbre variable : entre 500 et 1 200 tr/min
Diamètre de la turbine : 27 cm
Hauteur d'immersion de la turbine : 70 cm.

Les essais ont été mis en oeuvre dans les conditions indiquées dans le tableau 1 ci-après. Les résultats obtenus sont indiqués dans le tableau 2 ci-après.

## Tableau 1

| Essai | Débit liquide (l/min) | Débit gazeux (Nl/min) | Pureté du gaz (% molaire de $O_2$) | Débit de la purge (Nl/min) | Q Gaz re-circulé/ Q Gaz injecté | Flux molaire $O_2$ (kmol/h/m³ de volume utile) | Température (°C) | Pression relative (bars) | Temps de séjour (min) |
|---|---|---|---|---|---|---|---|---|---|
| 1 | 100 | 1810 | 99,9 % | | 2,6 | 16,1 | 105 | 7,8 | 3 |
| 2 | 33 | 970 | 93 % | 150 | 4,9 | 5,6 | 125 | 8 | 13 |
| 3 | 75 | 1980 | 99,9 % | | 5,5 | 17,6 | 160 | 19 | 4 |

## Tableau 2

| Essai | Sulfure résiduel | Pourcentage de Thiosulfate formé* | Pourcentage de sulfate formé* | Besoin théorique (oxygène en mol/mol de sulfure) | Oxygène consommé (oxygène en mol/mol de sulfure) |
|---|---|---|---|---|---|
| 1 | 0 | 67 % | 33 % | 1,23 | 1,36 |
| 2 | 0 | 6 % | 94 % | 1,9 | 2,11 |
| 3 | 0 | 5 % | 95 % | 1,92 | 2,13 |

* Les pourcentages en thiosulfate et sulfate sont donnés en poids. Le calcul est réalisé sur les ions $SO_4^=$ et $S_2O_3^=$ uniquement.

EP 1 345 680 B1

On constate qu'il est possible d'obtenir des taux de conversion élevés en sulfate avec des températures et pressions relativement basses (voir essai 2). Ces températures faibles permettent de limiter fortement les risques de corrosion de l'installation et les pressions peu élevées évitent de recomprimer le gaz pour l'application.

Les temps de séjour de la liqueur L dans le réacteur sont particulièrement faibles pour les températures choisies. Ceci permet d'obtenir des installations très compactes (temps ≤ 13 min avec gaz non pur).

Pour l'ensemble des essais, les consommations d'oxygène restent proches de la stoechiométrie.

Exemple 2

La Demanderesse a oxydé, par voie humide, selon le procédé de l'invention, des soudes usées de raffineries, présentant les caractéristiques suivantes :

- Demande Chimique en Oxygène (DCO) : 25 000 mg/l
- Carbone Organique Total (COT) : 300 mg/l
- Température initiale de l'effluent : 18°C.

L'effluent, après oxydation est neutralisé, avant son rejet.

Comme pour l'exemple 1, l'effluent est introduit en continu dans le haut d'un réacteur équipé d'une turbine auto-aspirante ; sa sortie après oxydation est régulée par une sonde de niveau. Le soutirage est réalisé dans la partie basse du réacteur.

Un régulateur de pression permet de maintenir la pression par un apport d'oxygène au fur et à mesure de sa consommation.

Le réacteur utilisé est identique à celui de l'exemple 1.

Les paramètres du procédé d'oxydation (par l'oxygène) mis en oeuvre sont indiqués dans le tableau 3 ci-après.

**Tableau 3**

| Essai | Débit liquide (l/min) | Débit gazeux (Nl/min) | Pureté du gaz (% molaire de $O_2$) | Flux molaire $O_2$ (kmol/h/h/m$^3$ de volume utile) | Température (°C) | Pression relative (bars) | Temps de séjour (min) |
|---|---|---|---|---|---|---|---|
| 1 | 33 | 580 | 99,9 % | 3,6 | 130 | 8 | 13 |

Dans ces conditions douces d'oxydation, une réduction de 98 % de la Demande Chimique en Oxygène (DCO, essentiellement due à la présence de sulfures) a été obtenue.

Exemple 3

La Demanderesse a oxydé (par de l'oxygène, pur à 99,9 % molaire), par voie humide, selon le procédé de l'invention, un effluent de l'industrie chimique. L'effluent considéré est composé essentiellement de molécules organo-azotées, très difficilement biodégradables. Il présente les principales caractéristiques suivantes :

- Demande Chimique en Oxygène (DCO) : 14 700 mg/l
- Rapport DCO/DBO$_5$ : 11,6 (DBO$_5$ Demande Biologique en Oxygène sous 5 jours).
- Azote organique : 1000 mg/l
- Température initiale de l'effluent : 150°C.

Le réacteur utilisé pour cet essai est ici aussi du type représenté sur la figure 1. Il est en Inox, équipé d'une turbine auto-aspirante en Hastelloy C22. Le réacteur et la turbine présentent les caractéristiques suivantes :

Diamètre interne de la cuve : 12 cm
Volume utile: 2 litres
Hauteur de l'ensemble (moteur + cuve) : 80 cm
Pression maximale de service : 30 bars
Puissance du moteur d'agitation : 0,18 kW
Vitesse de rotation de l'arbre variable: entre 500 et 3000 tr/min
Refroidissement assuré par un serpentin interne
Préchauffage assuré par une double paroi
Diamètre de la turbine : 4 cm
Hauteur d'immersion de la turbine : 10 cm.

La température de réaction est de 165°C.
La pression absolue du réacteur est de 20 bars.
Après 45 minutes de temps de séjour de l'effluent considéré dans le réacteur, on observe :

- une réduction de la Demande Chimique en Oxygène (DCO) de 11 %
- une ammonification totale traduisant une dégradation totale des composés organo-azotés.
- un rapport DCO/DBO$_5$ = 4,6 (cette diminution de la valeur dudit rapport de 11,6 à 4,6 traduit une augmentation importante de la biodégradabilité de l'effluent).

Un résultat similaire pourrait sans doute être obtenu, avec des temps de séjour beaucoup plus courts, dans des conditions de température et de pression plus élevées.
Le traitement oxydant, toujours réalisé dans des conditions douces de pression et température, permet un rejet de l'effluent vers une station de traitement biologique adaptées qui éliminera le reste de la pollution organique et azotée.
L'utilisation, dans le cadre de l'invention, de conditions d'oxydation douces permet de limiter les contraintes de matériels sur l'installation (épaisseur de l'acier utilisé, corrosion, risque de fuite,...) tout en conduisant aux résultats escomptés.

Exemple 4

La Demanderesse a évalué les performances du procédé de l'invention dans le contexte de la décoloration à l'ozone.
Elle a mis en oeuvre, à l'échelle du laboratoire, sur un même effluent coloré, renfermant 100 ppm de DCO soluble, des tests de décoloration :

a) dans un réacteur agité, équipé d'une turbine auto-aspirante (réacteur identique à celui de l'exemple 3) ;
b) dans un réacteur de type colonne à bulles.

Dans chacun des deux cas, un abattement de la couleur de 66 %, mesuré selon l'indice Pt/Co, pour une longueur d'onde de 455 nm, a été obtenu. Les conditions des tests sont indiquées dans le tableau 4 ci-après.

Tableau 4

| | Réacteur colonne à bulles (art antérieur) | Réacteur agité avec turbine auto-aspirante (invention) |
|---|---|---|
| Dose d'ozone (mg/l) | 62 | 36 |
| Temps de séjour (min) | 30 | 10 |
| Flux massique en ozone (kg $O_3$/h/ $m^3$ de volume réactionnel) | 0,12 | 0,22 |
| Abattement de la DCO (ppm) | 15 | $\sim 0$ |

Ces résultats montrent que la sélectivité de l'action de l'ozone est plus grande en mettant en oeuvre la technologie de l'invention.

En effet, dans cet exemple, les cinétiques d'ozonation des colorants sont beaucoup plus rapides que les cinétiques d'oxydation de la DCO. Ainsi, dans le cadre de l'utilisation de la colonne à bulles, au sein de laquelle les apports en oxydant sont beaucoup moins rapides que les cinétiques d'oxydation des colorants, une partie de l'oxydant (l'ozone) est consommé pour l'abaissement de la DCO. Lorsque le procédé de l'invention est mis en oeuvre, l'apport en oxydant n'est plus limitant, par rapport aux cinétiques de décoloration, on obtient une excellente homogénéité du milieu, il est dans ces conditions possible, en contrôlant le temps de séjour, de mettre en oeuvre les réactions rapides de décoloration, alors que l'abattement de la DCO reste en dessous de la limite de détection.

Ainsi, un gain de l'ordre de 40 % sur la consommation d'ozone et d'un facteur 3 sur les volumes de réacteur a été obtenu par application du procédé de l'invention à la décoloration.

**Revendications**

1. Procédé d'oxydation à l'aide d'un gaz d'oxydation d'un liquide contenu dans un réacteur (1) comprenant :

   - au moins un moyen d'introduction du gaz dans le réacteur et au moins un moyen d'introduction du liquide dans le réacteur,
   - au moins un moyen d'évacuation du liquide,
   - au moins un moyen d'agitation du liquide (2),
   - au moins un conduit (3) permettant l'aspiration du gaz présent dans le réacteur (1) et débouchant dans le liquide contenu dans le réacteur (1), procédé dans lequel :

     - le liquide et le gaz sont introduits dans le réacteur (1) en quantités telles qu'un ciel gazeux (20) est formé au dessus du liquide contenu dans le réacteur (1),
     - dans une étape de mélange du gaz et du liquide, le gaz du ciel gazeux (20) est aspiré dans le conduit (3) et introduit dans le liquide présent dans le réacteur au niveau du moyen d'agitation (2) du liquide de manière à dissoudre au moins une partie du gaz dans le liquide,
     - dans une étape de récupération, la partie du gaz qui est introduite dans le liquide présent dans le réacteur et qui n'est pas dissoute dans le liquide est récupérée dans le ciel gazeux (20),

   **caractérisé en ce que** lors de l'étape de mélange du gaz et du liquide, le moyen d'agitation (2) du liquide :

     - crée un flux de liquide dans l'espace (8) à proximité immédiate de l'extrémité du conduit (3) débouchant dans le liquide et génère une dispersion gaz/liquide dans la zone (15) au voisinage dudit espace (8), dite zone pré-réactionnelle, au sein de laquelle le liquide réagit avec le gaz, puis
     - véhicule et éjecte en sa périphérie ladite dispersion gaz/liquide selon une direction sensiblement horizontale, de telle sorte que le gaz se dissout dans le liquide dans la zone (16)s'étendant du moyen d'agitation (2) à la surface du liquide, dite zone de mélange.

2. Procédé selon la revendication 1, **caractérisé en ce que** le liquide est introduit et évacué en continu .

3. Procédé selon la revendication 1 **caractérisé en ce** le liquide est introduit et évacué en discontinu.

4. Procédé selon la revendication 1 ou 2, **caractérisé en ce qu'**au moins un moyen d'introduction du liquide dans le réacteur introduit le liquide à proximité du moyen d'agitation (2) de manière à ce qu'au moins une partie du flux de liquide dans l'espace (8) provienne directement dudit moyen d'introduction du liquide dans le réacteur.

5. Procédé selon l'une des revendications 1 à 4, **caractérisé en ce qu'**on soutire le liquide dans une troisième zone du réacteur dite zone de soutirage située en partie basse du réacteur et **en ce que** ce liquide soutiré présente une teneur en gaz non dissous inférieure à 5% en volume de gaz / volume de liquide.

6. Procédé selon l'une des revendications 1 à 5, **caractérisé en ce que** le gaz d'oxydation contient au moins 20% d'oxygène, de préférence au moins 80% d'oxygène, de préférence encore plus de 98% d'oxygène.

7. Procédé selon l'une des revendications 1 à 6, **caractérisé en ce que** le gaz d'oxydation contient de l'ozone.

8. Procédé selon l'une des revendications 1 à 7, **caractérisé en ce que** le réacteur délimite un volume clos.

9. Procédé selon l'une des revendications 1 à 8, **caractérisé en ce que** le liquide est un liquide aqueux

10. Procédé selon l'une des revendications 1 à 9, **caractérisé en ce que** le gaz d'oxydation est alimenté en continu à partir d'une source extérieure.

11. Procédé selon la revendication 10, **caractérisé en ce que** l'alimentation en gaz d'oxydation se fait à débit de gaz introduit contrôlé.

12. Procédé selon l'une des revendications 1 à 11, **caractérisé en ce que** l'alimentation en gaz d'oxydation se fait à pression de gaz oxydant dans le ciel gazeux contrôlée.

13. Procédé selon l'une des revendications 1 à 12, **caractérisé en ce que** lors de son introduction dans le réacteur, le gaz d'oxydation est introduit dans le liquide et/ou le gaz:

   - directement, dans le ciel gazeux; et/ou
   - directement au sein du liquide contenu dans le réacteur, avantageusement au moyen d'un tore percé d'orifices adéquats; et/ou
   - dans un espace ménagé dans le ciel gazeux, isolé totalement ou partiellement dudit ciel, de sorte qu'il soit directement aspiré pour être dispersé dans le liquide.

14. Procédé selon l'une des revendications 1 à 13, **caractérisé en ce que** durant la mise en oeuvre du procédé, une purge du ciel gazeux est réalisée en un point situé à une distance suffisante du lieu d'introduction du gaz d'oxydation pour ne pas perturber le fonctionnement du réacteur.

15. Procédé selon l'une des revendications 1 à 14, **caractérisé en ce que** les moyens d'agitation comprennent une turbine auto-aspirante (2) reliée par un arbre (3a, 3b) à un système d'entraînement (4).

16. Procédé selon la revendication 15, **caractérisé en ce que** ladite turbine auto-aspirante (2) présente un nombre de Froude modifié d'au moins 1, avantageusement compris entre 1,5 et 4.

17. Procédé selon l'une des revendications 15 ou 16, **caractérisé en ce que** l'arbre (3a) est un arbre creux, comportant au niveau du ciel gazeux (20) au moins une lumière (5a) ; le gaz étant aspiré au niveau de la lumière (5a) dans l'arbre creux (3a).

18. Procédé selon l'une des revendications 15 ou 16, **caractérisé en ce que** l'arbre (3b) est un arbre plein enveloppé coaxialement par une chemise (12), avantageusement cylindrique, un espace étant ménagé entre l'arbre plein (3b) et la chemise (12), laquelle communique en son extrémité supérieure (5b) avec le ciel gazeux (20) et débouche en son extrémité inférieure au niveau de la zone pré-réactionnelle dans la turbine auto-aspirante, le gaz (G) étant aspiré au niveau du ciel gazeux (20) dans l'espace ménagé entre l'arbre (3b) et la chemise (12).

19. Procédé selon l'une des revendications 15 à 18, **caractérisé en ce que** la turbine auto-aspirante (2) comporte au moins deux disques horizontaux, un disque supérieur (2') et un disque inférieur (2"), reliés l'un à l'autre par des ailettes (2'''); un espace (8) est ménagé entre le disque supérieur et l'arbre (3) de la turbine, espace assurant l'apport du flux de liquide à proximité immédiate de l'extrémité du conduit (3) vers la zone pré-réactionnelle située à la base de l'arbre entre les disques de la turbine

20. Procédé selon l'une des revendications 1 à 19, **caractérisé en ce que** le réacteur (1) est équipé sur ses parois internes de contre-pales anti-vortex (6).

21. Procédé selon l'une des revendications 1 à 20, **caractérisé en ce que**, lors de sa mise en oeuvre, une évacuation au moins partielle des calories dégagées est réalisée grâce à des moyens de refroidissement (10) disposés à l'intérieur et/ou à l'extérieur du réacteur (1).

22. Procédé selon l'une des revendications 1 à 21, **caractérisé en ce que** le liquide est chauffé.

23. Procédé selon l'une des revendications 1 à 22, **caractérisé en ce que** l'oxydation mise en oeuvre est une oxydation catalytique.

24. Procédé selon l'une des revendications 1 à 27, **caractérisé en ce qu'**il est mis en oeuvre avec :

- un contrôle de la température ($\theta$) et de la pression (P) dans le ciel gazeux, et/ou,
- un contrôle du niveau de liquide au sein dudit réacteur (1), et/ou,
- un contrôle de la quantité de gaz oxydant introduit, et/ou,
- un contrôle de la teneur en gaz oxydant du ciel gazeux (20), lorsqu'au moins un gaz non oxydant est contenu dans le gaz d'oxydation ;

25. Procédé selon l'une des revendications 1 à 24, **caractérisé en ce qu'**il est mis en oeuvre pour l'oxydation par l'oxygène de liquide constitué de milieux aqueux renfermant des composés soufrés et/ou des composés métalliques, et notamment pour :

- l'oxydation partielle ou totale des sulfures de liqueurs de papeterie,
- la synthèse de polysulfures par oxydation de liqueurs de papeterie,
- l'oxydation des sulfures dans les effluents industriels, notamment les souches de raffinerie,
- l'oxydation de sulfites en sulfates,
- l'oxydation de thiosulfates en sulfates,
- l'oxydation de composés métalliques tels $FeSO_4$, $FeCl_2$, $FeS$.

26. Procédé selon la revendication 25, **caractérisé en ce qu'**il est mis en oeuvre dans les conditions de température ($\theta$) et de pression (P) suivantes:
    $20°C \leq \theta \leq 200°C$ et $10^5$ Pa $\leq P \leq 10^7$ Pa (entre 1 et 100 bars) ;
    avantageusement :
    $60°C \leq \theta \leq 150°C$ et $10^5$ Pa $\leq P \leq 30.10^5$ Pa (entre 1 et 30 bars) ;
    de préférence :
    $100°C \leq \theta \leq 130°C$ et $10^5$ Pa $\leq P \leq 15.10^5$ Pa (entre 1 et 15 bars)

27. Procédé selon l'une des revendications 1 à 24, **caractérisé en ce qu'**il est mis en oeuvre pour l'oxydation par l'oxygène de liquide constitué de milieux aqueux contenant des composés organiques et présentant une demande chimique en oxygène (DCO) comprise entre 5 et 200 g/l, et notamment, pour l'oxydation d'effluents difficilement biodégradables et/ou renfermant des inhibiteurs de réactions biologiques.

28. Procédé selon la revendication 27, **caractérisé en ce qu'**il est mis en oeuvre dans les conditions de température ($\theta$) et de pression (P) suivantes :
    $20°C \leq \theta \leq 250°C$ et $10^5$ Pa $\leq P \leq 10^7$ Pa (entre 1 et 100 bars) ;
    avantageusement :
    $80°C \leq \theta \leq 180°C$ et $10^5$ Pa $\leq P \leq 25.10^5$ Pa (entre 1 et 25 bars).

29. Procédé selon l'une des revendications 1 à 24, **caractérisé en ce qu'**il est mis en oeuvre pour l'oxydation par l'oxygène de boues organiques dans des milieux aqueux dans les conditions de température ($\theta$) et de pression (P) suivantes :
    $40°C \leq \theta \leq 300°C$ et.$10^6$ Pa $\leq P \leq 15.10^6$ Pa (entre 10 et 150 bars) ;
    avantageusement :
    $150°C \leq \theta \leq 250°C$ et $2.10^6$ Pa $\leq P \leq 12.10^6$ Pa (entre 20 et 120 bars).

**30.** Procédé selon l'une des revendications 1 à 24, **caractérisé en ce qu'**il est mis en oeuvre pour l'oxydation par l'ozone de milieux aqueux; et notamment pour :

- la décoloration à l'ozone d'effluents industriels ou d'eaux de procédé ;
- l'ozonation des boues biologiques ;
- l'ozonation des cyanures ;
- l'ozonation de solutions aqueuses renfermant des composés organiques et présentant une demande chimique en oxygène (DCO) comprise entre 10 mg/l et 10 g/l.

**31.** Procédé selon la revendication 30, **caractérisé en ce qu'**il est mis en oeuvre dans les conditions de température (θ) et de pression (P) suivantes :

$5°C \leq \theta \leq 90°C$ et $10^5$ Pa $\leq$ P$\leq$ $1.510^6$ Pa (entre 1 et 15 bars) ;
avantageusement :
$10°C \leq \theta \leq 30°C$ et $10^5$ Pa $\leq$ P $\leq$ $3.10^5$ Pa (entre 1 et 3 bars).

**32.** Procédé selon l'une des revendications 25 à 31, **caractérisé en ce qu'**il est mis en oeuvre en présence d'au moins un initiateur de réactions radicalaires.

**Patentansprüche**

**1.** Verfahren zur Oxidation einer Flüssigkeit mittels eines Oxidationsgases, die in einem Reaktor (1) enthalten ist, der Folgendes umfasst:

- zumindest ein Mittel zum Einleiten des Gases in den Reaktor und zumindest ein Mittel zum Einleiten der Flüssigkeit in den Reaktor,
- zumindest ein Mittel zum Ableiten der Flüssigkeit,
- zumindest ein Mittel zum Rühren der Flüssigkeit (2),
- zumindest eine Leitung (3), die das Ansaugen des in dem Reaktor (1) vorhandenen Gases gestattet und in die in dem Reaktor (1) enthaltene Flüssigkeit mündet,

wobei bei dem Verfahren:

- die Flüssigkeit und das Gas in den Reaktor (1) in solchen Mengen eingeleitet werden, dass ein Gaskopfraum (20) über der in dem Reaktor (1) enthaltenen Flüssigkeit gebildet wird,
- in einem Schritt des Mischens des Gases und der Flüssigkeit das Gas aus dem Gaskopfraum (20) in die Leitung (3) angesaugt wird und in die in dem Reaktor vorhandene Flüssigkeit auf Höhe des Rührmittels (2) für die Flüssigkeit eingeleitet wird, so dass zumindest ein Teil des Gases in der Flüssigkeit gelöst wird,
- in einem Rückgewinnungsschritt der Teil des Gases, der in die in dem Reaktor vorhandene Flüssigkeit eingeleitet wird und der nicht in der Flüssigkeit gelöst wird, in dem Gaskopfraum (20) zurückgewonnen wird,

**dadurch gekennzeichnet, dass** bei dem Schritt des Mischens des Gases und der Flüssigkeit das Rührmittel (2) für die Flüssigkeit:

- einen Flüssigkeitsstrom in dem Raum (8) in unmittelbarer Nähe des Endes der in die Flüssigkeit mündenden Leitung (3) erzeugt und eine Gas/Flüssigkeitsdispersion in dem Bereich (15) in der Nachbarschaft des Raums (8), dem so genannten Präreaktionsbereich bewirkt, innerhalb dessen die Flüssigkeit mit dem Gas reagiert, und dann
- die Gas/Flüssigkeitsdispersion zu seiner Peripherie befördert und in einer im Wesentlichen horizontalen Richtung ausstößt, so dass das Gas sich in der Flüssigkeit in dem sich von dem Rührmittel (2) zur Oberfläche der Flüssigkeit erstreckenden Bereich (16), dem so genannten Mischbereich, löst.

**2.** Verfahren nach Anspruch 1, **dadurch gekennzeichnet, dass** die Flüssigkeit kontinuierlich eingeleitet und abgeleitet wird.

**3.** Verfahren nach Anspruch 1, **dadurch gekennzeichnet, dass** die Flüssigkeit diskontinuierlich eingeleitet und abgeleitet wird.

4. Verfahren nach Anspruch 1 oder 2, **dadurch gekennzeichnet, dass** zumindest ein Mittel zur Einleitung der Flüssigkeit in den Reaktor die Flüssigkeit in der Nähe des Rührmittels (2) einleitet, so dass zumindest ein Teil des Flüssigkeitsstroms in den Raum (8) direkt von dem Mittel zur Einleitung der Flüssigkeit in den Reaktor kommt.

5. Verfahren nach einem der Ansprüche 1 bis 4, **dadurch gekennzeichnet, dass** die Flüssigkeit in einem dritten Bereich des Reaktors abgezogen wird, dem so genannten Anzugbereich, der im unteren Teil des Reaktors liegt, und dass diese abgezogene Flüssigkeit einen Gehalt an nicht gelöstem Gas kleiner 5% Gasvolumen/Flüssigkeitsvolumen aufweist.

6. Verfahren nach einem der Ansprüche 1 bis 5, **dadurch gekennzeichnet, dass** das Oxidationsgas zumindest 20% Sauerstoff, vorzugsweise zumindest 80% Sauerstoff und insbesondere mehr als 98% Sauerstoff enthält.

7. Verfahren nach einem der Ansprüche 1 bis 6, **dadurch gekennzeichnet, dass** das Oxidationsgas Ozon enthält.

8. Verfahren nach einem der Ansprüche 1 bis 7, **dadurch gekennzeichnet, dass** der Reaktor ein geschlossenes Volumen begrenzt.

9. Verfahren nach einem der Ansprüche 1 bis 8, **dadurch gekennzeichnet, dass** die Flüssigkeit eine wässrige Flüssigkeit ist.

10. Verfahren nach einem der Ansprüche 1 bis 9, **dadurch gekennzeichnet, dass** das Oxidationsgas kontinuierlich aus einer äußeren Quelle zugeführt wird.

11. Verfahren nach Anspruch 10, **dadurch gekennzeichnet, dass** die Versorgung mit Oxidationsgas mit einem gesteuerten Gaszufluss erfolgt.

12. Verfahren nach einem der Ansprüche 1 bis 11, **dadurch gekennzeichnet, dass** die Versorgung mit Oxidationsgas mit gesteuertem Druck des Oxidationsgases in dem Gaskopfraum erfolgt.

13. Verfahren nach einem der Ansprüche 1 bis 12, **dadurch gekennzeichnet, dass** das Oxidationsgas bei seiner Einleitung in den Reaktor in die Flüssigkeit und/oder das Gas folgendermaßen eingeleitet wird:

- direkt in dem Gaskopfraum und/oder
- direkt innerhalb der in dem Reaktor enthaltenen Flüssigkeit, vorteilhafterweise mittels eines von geeigneten Öffnungen durchbrochenen Torus, und/oder
- in einem Raum, der in dem Gaskopfraum ausgebildet ist und ganz oder teilweise vom Kopfraum isoliert ist, so dass es nicht direkt angesaugt wird, um in der Flüssigkeit dispergiert zu werden.

14. Verfahren nach einem der Ansprüche 1 bis 13, **dadurch gekennzeichnet, dass** während der Durchführung des Verfahrens eine Entleerung des Gaskopfraums an einem Punkt durchgeführt wird, der sich in einem ausreichenden Abstand von dem Ort des Einführens des Oxidationsgases befindet, um den Betrieb des Reaktors nicht zu stören.

15. Verfahren nach einem der Ansprüche 1 bis 14, **dadurch gekennzeichnet, dass** die Rührmittel eine selbstansaugende Turbine (2) umfassen, die über eine Welle (3a, 3b) mit einem Antriebssystem (4) verbunden ist.

16. Verfahren nach Anspruch 15, **dadurch gekennzeichnet, dass** die selbstansaugende Turbine (2) eine modifizierte Froude-Zahl von zumindest 1 und vorteilhafterweise zwischen 1,5 und 4 aufweist.

17. Verfahren nach einem der Ansprüche 15 oder 16, **dadurch gekennzeichnet, dass** die Welle (3a) eine Hohlwelle ist, die auf Höhe des Gaskopfraums (20) zumindest eine Öffnung (5a) aufweist, wobei das Gas auf Höhe der Öffnung (5a) in die Hohlwelle (3a) gesaugt wird.

18. Verfahren nach einem der Ansprüche 15 oder 16, **dadurch gekennzeichnet, dass** die Welle (3b) eine Vollwelle ist, die koaxial von einem vorteilhafterweise zylindrischen Mantel (12) umhüllt ist, wobei zwischen der Vollwelle (3b) und dem Mantel (12) ein Raum ausgebildet ist, der an seinem oberen Ende (5b) mit dem Gaskopfraum (20) in Verbindung steht und an seinem unteren Ende auf Höhe des Präreaktionsbereichs in die selbstansaugende Turbine mündet, wobei das Gas (G) auf Höhe des Gaskopfraums (20) in dem zwischen der Welle (3b) und dem Mantel (12) ausgebildeten Raum angesaugt wird.

**19.** Verfahren nach einem der Ansprüche 15 bis 18, **dadurch gekennzeichnet, dass** die selbstansaugende Turbine (2) zumindest zwei horizontale Scheiben umfasst, eine obere Scheibe (2') und eine untere Scheibe (2''), die miteinander durch Schaufeln (2''') verbunden sind, und ein Raum (8) zwischen der oberen Scheibe und der Welle (3) der Turbine ausgebildet ist, der für die Heranführung des Flüssigkeitsstroms in unmittelbarer Nähe des Endes der Leitung (3) zum Präreaktionsbereich sorgt, der an der Basis der Welle zwischen den Scheiben der Turbine liegt.

**20.** Verfahren nach einem der Ansprüche 1 bis 19, **dadurch gekennzeichnet, dass** der Reaktor (1) auf seinen Innenwänden mit wirbelverhindernden Gegenflügeln (6) versehen ist.

**21.** Verfahren nach einem der Ansprüche 1 bis 20, **dadurch gekennzeichnet, dass** bei seiner Durchführung eine zumindest teilweise Ableitung der freigesetzten Kalorien mittels Kühlmitteln (10) erfolgt, die innerhalb und/oder außerhalb des Reaktors (1) angeordnet sind.

**22.** Verfahren nach einem der Ansprüche 1 bis 21, **dadurch gekennzeichnet, dass** die Flüssigkeit erwärmt wird.

**23.** Verfahren nach einem der Ansprüche 1 bis 22, **dadurch gekennzeichnet, dass** die durchgeführte Oxidation eine katalytische Oxidation ist.

**24.** Verfahren nach einem der Ansprüche 1 bis 23, **dadurch gekennzeichnet, dass** es durchgeführt wird mit:

- einer Steuerung der Temperatur ($\theta$) und des Drucks (P) in dem Gaskopfraum und/oder
- einer Steuerung des Flüssigkeitspegels im Inneren des Reaktors (1) und/oder
- eine Steuerung der eingeleiteten Oxidationsgasmenge und/oder
- einer Steuerung des Oxidationsgasgehalts des Gaskopfraums (20), wenn zumindest ein nicht oxidierendes Gas in dem Oxidationsgas enthalten ist.

**25.** Verfahren nach einem der Ansprüche 1 bis 24, **dadurch gekennzeichnet, dass** es eingesetzt wird zur Oxidation durch Sauerstoff einer aus wässrigen Medien bestehenden Flüssigkeit, die schwefelhaltige Verbindungen und/oder Metallverbindungen enthält, und insbesondere für:

- die teilweise oder vollständige Oxidation der Sulfide der Flüssigkeiten der Papierherstellung,
- die Synthese von Polysulfiden durch Oxidation von Flüssigkeiten der Papierherstellung,
- die Oxidation von Sulfiden in Industrieabwässern, insbesondere Raffinerieabwässern,
- die Oxidation von Sulfiten zu Sulfaten,
- die Oxidation von Thiosulfaten in Sulfate,
- die Oxidation von metallischen Verbindungen wie beispielsweise $FeSO_4$, $FeCl_2$, $FeS$.

**26.** Verfahren nach Anspruch 25, **dadurch gekennzeichnet, dass** es unter folgenden Temperatur-($\theta$) und Druckbedingungen (P) durchgeführt wird:
$20°C \leq \theta \leq 200°C$ und $10^5$ Pa $\leq P \leq 10^7$ Pa (zwischen 1 und 100 bar)
vorteilhafterweise:
$60°C \leq \theta \leq 150°C$ und $10^5$ Pa $\leq P \leq 30.10^5$ Pa (zwischen 1 und 30 bar)
vorzugsweise:
$100°C \leq \theta \leq 130°C$ und $10^5$ Pa $\leq P \leq 15.10^5$ Pa (zwischen 1 und 15 bar)

**27.** Verfahren nach einem der Ansprüche 1 bis 24, **dadurch gekennzeichnet, dass** es eingesetzt wird zur Oxidation durch Sauerstoff einer aus wässrigen Medien bestehenden Flüssigkeit, die organische Verbindungen enthält und einen chemischen Sauerstoffbedarf (DCO) zwischen 5 und 200 g/l aufweist und insbesondere zur Oxidation von biologisch schwer abbaubaren und/oder biologische Reaktionshemmer enthaltenen Abwässern.

**28.** Verfahren nach Anspruch 27, **dadurch gekennzeichnet, dass** es unter folgenden Temperatur- ($\theta$) und Druckbedingungen (P) durchgeführt wird:
$20°C \leq \theta \leq 250°C$ und $10^5$ Pa $\leq P \leq 10^7$ Pa (zwischen 1 und 100 bar)
vorteilhafterweise:
$80°C \leq \theta \leq 180°C$ und $10^5$ Pa $\leq P \leq 25.10^5$ Pa (zwischen 1 und 25 bar).

**29.** Verfahren nach einem der Ansprüche 1 bis 24,
**dadurch gekennzeichnet, dass** es zur Oxidation von organischen Schlämmen durch Sauerstoff in wässrigen Medien unter folgenden Temperatur- (θ) und Druckbedingungen (P) durchgeführt wird:
$40°C \leq θ \leq 300°C$ und $10^6$ Pa $\leq P \leq 15.10^6$ Pa (zwischen 10 und 150 bar)
vorteilhafterweise:
$150°C \leq θ \leq 250°C$ und $2.10^6$ Pa $\leq P \leq 12.10^6$ Pa (zwischen 20 und 120 bar).

30. Verfahren nach einem der Ansprüche 1 bis 24,
**dadurch gekennzeichnet, dass** es zur Oxidation von wässrigen Medien durch Ozon eingesetzt wird und insbesondere:

- zu Ozonbleichung von Industrieabwässern oder Prozessabwässern,
- zur Ozonisierung von biologischen Schlämmen,
- zur Ozonisierung von Cyaniden,
- Ozonisierung von wässrigen Lösungen, die organische Verbindungen enthalten und einen chemischen Sauerstoffbedarf (DCO) zwischen 10 mg/l und 10 g/l aufweisen.

31. Verfahren nach Anspruch 30, **dadurch gekennzeichnet, dass** es unter folgenden Temperatur- (θ) und Druckbedingungen (P) durchgeführt wird:
$5°C \leq θ \leq 90°C$ und $10^5$ Pa $\leq P \leq 1,5.10^6$ Pa
(zwischen 1 und 15 bar)
vorteilhafterweise:
$10°C \leq θ \leq 30°C$ und $10^5$ Pa $\leq P \leq 3.10^5$ Pa (zwischen 1 und 3 bar).

32. Verfahren nach einem der Ansprüche 25 bis 31,
**dadurch gekennzeichnet, dass** es in Gegenwart von zumindest einem Initiator für Radikalenreaktionen eingesetzt wird.

**Claims**

1. Method for oxidation, using an oxidation gas, of a liquid contained in a reactor (1) comprising:

- at least one means of introducing the gas into the reactor and at least one means of introducing the liquid into the reactor,
- at least one means of removing the liquid,
- at least one means of stirring the liquid (2),
- at least one pipe (3) for aspirating the gas present in the reactor (1) and discharging into the liquid contained in the reactor (1),

method in which:

- the liquid and the gas are introduced into the reactor (1) in quantities such that a gas overhead (20) is formed above the liquid contained in the reactor (1),
- in a mixing step of the gas and the liquid, the gas of the gas overhead (20) is aspirated in the pipe (3) and introduced into the liquid present in the reactor at the level of the means (2) of stirring the liquid in order to dissolve at least a portion of the gas in the liquid,
- in a recovery step, the portion of gas which is introduced into the liquid present in the reactor and which is not dissolved in the liquid is recovered in the gas overhead (20),

**characterized in that** during the mixing step of the gas and of the liquid, the means (2) of stirring the liquid:

- creates a liquid flux in the space (8) in the immediate neighbourhood of the end of the pipe (3) discharging into the liquid and generates a gas/liquid dispersion in the zone (15) in the neighbourhood of said space (8), called the pre-reaction zone, in which the liquid reacts with the gas, then
- conveys said gas/liquid dispersion and ejects it at its periphery in a substantially horizontal direction, so that the gas is dissolved in the liquid in the zone (16) extending from the stirring means (2) to the liquid surface, called the mixing zone.

2. Method according to Claim 1, **characterized in that** the liquid is introduced and removed continuously.

3. Method according to Claim 1, **characterized in that** the liquid is introduced and removed in batches.

4. Method according to Claim 1 or 2, **characterized in that** at least one means of introducing the liquid into the reactor introduces the liquid in the neighbourhood of the stirring means (2) so that at least a portion of the liquid flux in the space (8) originates directly from said means of introducing the liquid into the reactor.

5. Method according to one of Claims 1 to 4, **characterized in that** the liquid is withdrawn in a third zone of the reactor called the withdrawal zone, situated in the bottom portion of the reactor, and **in that** this withdrawn liquid has an undissolved gas content of less than 5% by volume of gas/volume of liquid.

6. Method according to one of Claims 1 to 5, **characterized in that** the oxidation gas contains at least 20% oxygen, preferably at least 80% oxygen, and even more preferably more than 98% oxygen.

7. Method according to one of Claims 1 to 6, **characterized in that** the oxidation gas contains ozone.

8. Method according to one of Claims 1 to 7, **characterized in that** the reactor delimits a closed volume.

9. Method according to one of Claims 1 to 8, **characterized in that** the liquid is an aqueous liquid.

10. Method according to one of Claims 1 to 9, **characterized in that** the oxidation gas is supplied continuously from an external source.

11. Method according to Claim 10, **characterized in that** the oxidation gas is supplied at a controlled gas flow rate.

12. Method according to one of Claims 1 to 11, **characterized in that** the oxidation gas is supplied at controlled oxidizing gas pressure in the gas overhead.

13. Method according to one of Claims 1 to 12, **characterized in that** during its introduction into the reactor, the oxidation gas is introduced into the liquid and/or the gas:

   - directly, into the gas overhead; and/or
   - directly into the liquid contained in the reactor, advantageously by means of a toroid perforated with adequate orifices; and/or
   - into a space arranged in the gas overhead, totally or partially isolated from said overhead, so that it is directly aspirated in order to be dispersed in the liquid.

14. Method according to one of Claims 1 to 13, **characterized in that** during implementation of the method, the gas overhead is purged at a point situated at a sufficient distance from the place of introduction of the oxidation gas in order to avoid disturbing the operation of the reactor.

15. Method according to one of Claims 1 to 14, **characterized in that** the stirring means comprise a self-aspirating turbine (2) connected by a shaft (3a, 3b) to a drive system (4).

16. Method according to Claim 15, **characterized in that** said self-aspirating turbine (2) has a modified Froude number of at least 1, advantageously between 1.5 and 4.

17. Method according to one of Claims 15 or 16, **characterized in that** the shaft (3a) is a hollow shaft, comprising at the level of the gas overhead (20) at least one slot (5a); the gas being aspirated at the level of the slot (5a) into the hollow shaft (3a).

18. Method according to one of Claims 15 or 16, **characterized in that** the shaft (3b) is a solid shaft coaxially enveloped by a jacket (12), advantageously cylindrical, a space being arranged between the solid shaft (3b) and the jacket (12), which communicates at its upper end (5b) with the gas overhead (20) and terminates at its lower end at the level of the pre-reaction zone in the self-aspirating turbine, the gas (G) being aspirated at the level of the gas overhead (20) into the space arranged between the shaft (3b) and the jacket (12).

19. Method according to one of Claims 15 to 18, **characterized in that** the self-aspirating turbine (2) comprises at least two horizontal discs, an upper disc (2') and a lower disc (2") connected to one another by fins (2'''); a space (8) is arranged between the upper disc and the shaft (3) of the turbine, said space contributing the liquid flux in the immediate proximity of the end of the pipe (3) to the pre-reaction zone situated at the base of the shaft between the discs of the turbine.

20. Method according to one of Claims 1 to 19, **characterized in that** the reactor (1) is equipped on its inside walls with anti-vortex counter-blades (6).

21. Method according to one of Claims 1 to 20, **characterized in that**, during its implementation, at least part of the heat liberated is removed thanks to cooling means (10) placed inside and/or outside the reactor (1).

22. Method according to one of Claims 1 to 21, **characterized in that** the liquid is heated.

23. Method according to one of Claims 1 to 22, **characterized in that** the oxidation carried out is a catalytic oxidation.

24. Method according to one of Claims 1 to 23, **characterized in that** it is implemented with:

   - a control of the temperature ($\theta$) and of the pressure (P) in the gas overhead, and/or,
   - a control of the liquid level in said reactor (1), and/or,
   - a control of the quantity of oxidizing gas introduced, and/or,
   - a control of the oxidizing gas content of the gas overhead (20), when at least one non-oxidizing gas is contained in the oxidation gas.

25. Method according to one of Claims 1 to 24, **characterized in that** it is implemented for the oxidation by oxygen of liquid consisting of aqueous media containing sulphur compounds and/or metallic compounds, and particularly for:

   - the partial or total oxidation of the sulphides of paper mill liquors,
   - the synthesis of polysulphides by oxidation of paper mill liquors,
   - the oxidation of the sulphides in industrial effluents, particularly refinery releases,
   - the oxidation of sulphites to sulphates,
   - the oxidation of thiosulphates to sulphates,
   - the oxidation of metallic compounds such as $FeSO_4$, $FeCl_2$, FeS.

26. Method according to Claim 25, **characterized in that** it is implemented in the following temperature ($\theta$) and pressure (P) conditions:
   $20°C < \theta < 200°C$ and $10^5$ Pa $< P < 10^7$ Pa (between 1 and 100 bar);
   advantageously:
   $60°C < \theta < 150°C$ and $10^5$ Pa $< P < 30{\times}10^5$ Pa (between 1 and 30 bar);
   and preferably:
   $100°C < \theta < 130°C$ and $10^5$ Pa $< P < 15{\times}10^5$ Pa (between 1 and 15 bar).

27. Method according to one of Claims 1 to 24, **characterized in that** it is implemented for the oxidation by oxygen of liquid consisting of aqueous media containing organic compounds and having a chemical oxygen demand (COD) between 5 and 200 g/l, and particularly, for the oxidation of effluents that are biodegradable with difficulty and/or contain inhibitors of biological reactions.

28. Method according to Claim 27, **characterized in that** it is implemented under the following temperature ($\theta$) and pressure (P) conditions:
   $20°C < \theta < 250°C$ and $10^5$ Pa $< P < 10^7$ Pa (between 1 and 100 bar);
   advantageously:
   $80°C < \theta < 180°C$ and $10^5$ Pa $< P < 25{\times}10^5$ Pa (between 1 and 25 bar).

29. Method according to one of Claims 1 to 24,
   **characterized in that** it is implemented for the oxidation by oxygen of organic sludges in aqueous media under the following temperature ($\theta$) and pressure (P) conditions:
   $40°C < \theta < 300°C$ and $10^6$ Pa $< P < 15{\times}10^6$ Pa (between 10 and 150 bar);
   advantageously:
   $150°C < \theta < 250°C$ and $2{\times}10^6$ Pa $< P < 12{\times}10^6$ Pa (between 20 and 120 bar).

30. Method according to one of Claims 1 to 24, **characterized in that** it is implemented for the oxidation by ozone of aqueous media; and particularly for:

- the bleaching with ozone of industrial effluents or of process water;
- the ozonization of biological sludges;
- the ozonization of cyanides;
- the ozonization of aqueous solutions containing organic compounds and having a chemical oxygen demand (COD) between 10 mg/l and 10 g/l.

31. Method according to Claim 30, **characterized in that** it is implemented under the following temperature ($\theta$) and pressure (P) conditions:

$5°C < \theta < 90°C$ and $10^5$ Pa $< P < 1 \times 510^6$ Pa (between 1 and 15 bar);
advantageously:
$10°C < \theta < 30°C$ and $10^5$ Pa $< P < 3 \times 10^5$ Pa (between 1 and 3 bar).

32. Method according to one of Claims 25 to 31, **characterized in that** it is implemented in the presence of at least one initiator of free radical reactions.

FIG.1

G'

4

G

5b

9b

L

$H_2O_L$

20

3b

16

12

10

L

1

6

2'

8

2'''

$H_2O_L$

15

2''

17

2'

L

FIG.2

FIG.3